# EUROPEAN PATENT APPLICATION

(11) **EP 4 418 749 A1**
(43) Date of publication of application: **21.08.2024**
(21) Application number: 22894587.9
(22) Date of filing: 25.10.2022
(51) Int. Cl.: H04W 52/02

(54) **METHOD FOR TRANSMITTING DATA AND COMMUNICATION APPARATUS**

(30) Priority: 16.11.2021 CN 202111357836; 24.12.2021 CN 202111604739
(71) Applicant: Huawei Technologies Co., Ltd., Shenzhen, Guangdong 518129 (CN)
(72) Inventor: KUANG, Yiru, Shenzhen, Guangdong 518129 (CN); XU, Haibo, Shenzhen, Guangdong 518129 (CN); XUE, Lixia, Shenzhen, Guangdong 518129 (CN)
(74) Representative: Goddar, Heinz J.
(86) International application number: PCT/CN2022/127496
(87) International publication number: WO 2023/088050

(57) **Abstract**

This application provides a data transmission method and a communication apparatus, and relates to the communication field. In the method, after sending first data on a first resource, a first device may monitor second data on a second resource associated with the first resource. In other words, because the second resource is associated with the first resource, the first device directly monitors the second data on the second resource, so that power consumption caused by blind detection can be avoided, or power consumption caused by detection based on a DRX function can be avoided, thereby reducing power consumption of the first device. The method provided in the embodiments may be applied to a communication system like a 5G or NR communication system, an LTE communication system, a V2X communication system, a D2D communication system, an M2M communication system, an MTC communication system, or an Internet of Things communication system.

## Description

This application claims priority to Chinese Patent Application No. 202111357836.3, filed with the China National Intellectual Property Administration on November 16, 2021 and entitled "UE-LED DATA TRANSMISSION METHOD", and to Chinese Patent Application No. 202111604739.X, filed with the China National Intellectual Property Administration on December 24, 2021 and entitled "DATA TRANSMISSION METHOD AND COMMUNICATION APPARATUS", both of which are incorporated herein by reference in their entireties.

### TECHNICAL FIELD

This application relates to the communication field, and more specifically, to a data transmission method and a communication apparatus in the communication field.

### BACKGROUND

In a conventional communication technology, after a first device sends data to a second device, the first device needs to perform blind detection (blind detection, BD) on data sent by the second device, which causes high power consumption; or the first device needs to periodically detect, in a discontinuous reception (discontinuous reception, DRX) manner, data sent by the second device, which also causes high power consumption.

### SUMMARY

Embodiments of this application provide a data transmission method and a communication apparatus, to reduce power consumption of a first device.

According to a first aspect, a data transmission method is provided, where the method is applicable to a first device, and the method includes: sending first data on a first resource, and monitoring second data on a second resource associated with the first resource.

In the foregoing solution, after sending the first data on the first resource, the first device may monitor the second data on the second resource associated with the first resource. In other words, because the second resource is associated with the first resource, the first device directly monitors the second data on the second resource, so that power consumption caused by blind detection can be avoided, or power consumption caused by detection based on a DRX function can be avoided, thereby reducing power consumption of the first device.

Optionally, the first resource may be associated with the second resource in time domain. Optionally, the association between the second resource and the first resource in time domain may be that a time offset of the second resource relative to the first resource is a first time offset. Optionally, a protocol may specify the first time offset, or a network device may configure the first time offset for a terminal device. Optionally, the network device preconfigures the first time offset or configures the first time offset in real time for the terminal device. Time at which the network device configures the first time offset is not limited in embodiments of this application.

Optionally, the first resource may be associated with the second resource in frequency domain. Optionally, the association between the second resource and the first resource in frequency domain may be that a frequency offset of the second resource relative to the first resource is a carrier offset of a first carrier quantity. Optionally, a protocol may specify the carrier offset of the first carrier quantity, or a network device may configure the carrier offset of the first carrier quantity for a terminal device. Optionally, the network device preconfigures the carrier offset of the first carrier quantity or configures the carrier offset of the first carrier quantity in real time for the terminal device. Time at which the network device configures the carrier offset of the first carrier quantity is not limited in embodiments of this application.

Optionally, the first resource may be associated with the second resource in time domain and frequency domain. Optionally, the associations between the second resource and the first resource in time domain and frequency domain may be that a time offset of the second resource relative to the first resource is a first time offset, and a frequency offset of the second resource relative to the first resource is a carrier offset of a first carrier quantity. Optionally, a protocol may specify the carrier offset of the first carrier quantity and the first time offset, or a network device may configure the carrier offset of the first carrier quantity and the first time offset for a terminal device. The network device may preconfigure the carrier offset of the first carrier quantity and the first time offset or may configure the carrier offset of the first carrier quantity and the first time offset in real time for the terminal device.

Optionally, the first resource may be a preconfigured resource. For example, the first resource may be a resource preconfigured by a second device for the first device.

Optionally, the first resource may be a dynamically scheduled resource. For example, the first resource may be a resource scheduled by using control information sent by the second device.

Optionally, the first resource may be a resource scheduled in a semi-persistent manner.

Optionally, the first device is a terminal device, and the second device is a network device.

Optionally, the first device is a terminal device, and the second device is another terminal device.

Optionally, the first device is an energy harvesting device. Optionally, the first device has sufficient energy and may send the first data on the first resource.

Optionally, the second data corresponds to the first data. Optionally, the second data may be feedback data of the first data. In other words, the second data is downlink feedback data of the uplink first data. Optionally, the second data may be TCP feedback data of the first data.

In some possible implementations, the monitoring second data on a second resource associated with the first resource includes:
if the first data is successfully sent on the first resource, monitoring the second data on the second resource associated with the first resource.

In the foregoing solution, after the first data is successfully sent on the first resource, the first device may monitor the second data on the second resource associated with the first resource. In this way, a case in which the first device blindly receives the second data when the first data fails to be sent is avoided. Blindly receiving the second data may also cause the second data fails to be received.

In some possible implementations, the method further includes: if first control information indicating the first device to retransmit the first data is not received, determining that the first data is successfully sent on the first resource.

Optionally, an association exists between a resource on which the first control information is monitored by the first device and the first resource. The first device may determine, based on the association, the resource on which the first control information is monitored, and monitors the first control information on the determined resource.

In some possible implementations, if first acknowledgment information of the first data is received, and the first acknowledgment information indicates that the first data is successfully received, determining that the first data is successfully sent on the first resource.

Optionally, an association exists between a resource on which the first acknowledgment information is monitored by the first device and the first resource. The first device may determine, based on the association, the resource on which the first acknowledgment information is monitored, and monitor the first acknowledgment information on the determined resource.

In some possible implementations, before the sending first data on a first resource, the method further includes: sending the first data on a preconfigured third resource; and receiving second control information, where the second control information indicates the first resource on which the first device retransmits the first data.

In the foregoing solution, after failing to send the first data on the preconfigured third resource, the first device may receive the second control information indicating the first resource on which the first data is retransmitted, and retransmit the first data on the first resource. In other words, after initial transmission fails, the first device may receive the retransmitted second control information, and retransmit the first data on the first resource indicated by the second control information. In other words, the second resource on which the second data is monitored is associated with the first resource on which the first data is retransmitted.

In some possible implementations, before the sending first data on a first resource, the method further includes:
sending the first data on a preconfigured third resource; and the sending first data on a first resource includes:
if second acknowledgment information of the first data sent on the third resource is received, and the second acknowledgment information indicates that the first data fails to be received, retransmitting the first data on the preconfigured first resource.

In the foregoing solution, after failing to send the first data on the preconfigured third resource, the first device may receive the second acknowledgment information indicating a retransmission failure, and retransmit the first data on the preconfigured first resource. In other words, after initial transmission fails, the first device may retransmit the first data on the first preconfigured resource. In other words, the second resource on which the second data is monitored is associated with the first resource on which the first data is retransmitted.

In some possible implementations, the preconfigured third resource is used for initial transmission or retransmission.

In the foregoing solution, when the preconfigured third resource is used for the initial transmission, the first resource is a resource used for the retransmission; or when the preconfigured third resource is used for the retransmission, the first resource is a resource used for retransmission for another time after the retransmission fails.

In some possible implementations, the first resource and the third resource are resources included in a same periodic resource set, or the first resource and the third resource are resources included in different periodic resource sets.

In the foregoing solution, a periodic resource set may include a resource used for the retransmission or a resource used for the initial transmission. In this way, the first device may select a resource from the periodic resource set during the initial transmission, or may select a resource from the periodic resource set during the retransmission. Alternatively, resources included in different periodic resource sets are used for different transmission. For the initial transmission, a resource may be selected from a periodic resource set used for the initial transmission. For the retransmission, a resource may be selected from a periodic resource set used for the retransmission.

In some possible implementations, the method further includes: sending third acknowledgment information of the second data on a fourth resource associated with the first resource and/or the second resource.

In the foregoing solution, the first device may send the third acknowledgment information of the second data on the fourth resource associated with the first resource and/or the second resource. In this way, power consumption caused by blind detection on the second data by the second device can be avoided.

Optionally, because the second resource is associated with the first resource, if the fourth resource is associated with the first resource, the fourth resource is also associated with the second resource; or if the fourth resource is associated with the first resource, the fourth resource is also associated with the second resource.

In some possible implementations, a time offset of the fourth resource relative to the first resource is a second time offset, and/or a time offset of the fourth resource relative to the second resource is a third time offset.

Optionally, the second time offset is a sum of the third time offset and the first time offset.

In some possible implementations, if the first device fails to receive the second data on the second resource, the third acknowledgment information indicates that the second data fails to be received; and the method further includes:
monitoring the second data on a fifth resource.

In some possible implementations, a time offset of the fifth resource relative to the fourth resource is a fourth time offset.

In the foregoing solution, the first device determines the fifth resource based on the fourth resource and the fourth time offset, and monitors the second data on the fifth resource.

In some possible implementations, before the monitoring the second data on a fifth resource, the method further includes:
receiving third control information, where the third control information indicates the fifth resource on which the second device resends the second data.

In the foregoing solution, if the third acknowledgment information indicates that the first device fails to receive the second data, the second device may send the third control information to the first device, and indicate the fifth resource on which the second device resends the second data. In this way, overheads caused by blind detection, by the first device, of the second data resent by the second device are avoided.

In some possible implementations, the method further includes: sending, on a sixth resource, fourth acknowledgment information of the second data monitored on the fifth resource, where
the third control information further indicates the sixth resource.

In the foregoing solution, the second device may simultaneously indicate the fifth resource on which the second device resends the second data and the sixth resource on which the fourth acknowledgment information of the second data received on the fifth resource is fed back. In this way, a case in which the first device cannot determine a resource to feed back the fourth acknowledgment information can be avoided.

In some possible implementations, the method further includes: sending, on a sixth resource, fourth acknowledgment information of the second data monitored on the fifth resource, where
a time offset of the sixth resource relative to the fifth resource is a fifth time offset.

In the foregoing solution, after monitoring the second data on the fifth resource, the first device may send, on the sixth resource associated with the fifth resource, the fourth acknowledgment information of the second data monitored on the fifth resource. In this way, a case in which the first device cannot determine a resource to feed back the fourth acknowledgment information can be avoided.

In some possible implementations, before the monitoring second data on a second resource associated with the first resource, the method further includes:
monitoring the second data on a seventh resource associated with the first resource; and
the monitoring second data on a second resource associated with the first resource includes:
   if the second data fails to be received on the seventh resource, monitoring the second data on the second resource associated with the first resource.

In the foregoing solution, after sending the first data on the first resource, the first device may monitor the second data on the seventh resource associated with the first resource. If the first device fails to receive the second data on the seventh resource, the first device may continue to monitor the second data on the second resource associated with the first resource.

Optionally, after failing to receive the second data on the seventh resource, the first device may send, to the second device on an eighth resource associated with the seventh resource, fifth acknowledgment information of the second data received on the seventh resource, where the fifth acknowledgment information indicates that the second data fails to be received on the seventh resource. The second device resends the second data on the second resource associated with the eighth resource, and the first device monitors the second data on the second resource associated with the eighth resource. If the first device fails to receive the second data on the second resource, the first device sends, on the fourth resource associated with the second resource, the third acknowledgment information of the second data received on the second resource. In this way, the second device repeatedly sends the second data after the second device fails to send the second data, and power consumption caused by blind sending of the second data by the second device and blind detection on the first data by the first device is avoided.

Because the seventh resource is associated with the first resource, the eighth resource is associated with the seventh resource, and the eighth resource is associated with the second resource, the first resource is associated with the second resource.

According to a second aspect, a data transmission method is provided, where the method is applied to a second device, and the method includes:
monitoring first data on a first resource; and
if the first data is received on the first resource, sending second data on a second resource associated with the first resource.

In the foregoing solution, after monitoring the first data on the first resource, the second device may send the second data on the second resource associated with the first resource. Because the second resource is associated with the first resource, the second device directly monitors the second data on the second resource, so that power consumption caused by blind detection can be avoided, or power consumption caused by detection based on a DRX function can be avoided, thereby reducing power consumption of the second device.

In some possible implementations, a time offset of the second resource relative to the first resource is a first time offset.

In some possible implementations, before the monitoring first data on a first resource, the method further includes:
monitoring the first data on a third resource, where the third resource is a resource preconfigured by the second device; and
if the first data is not received on the third resource, sending second control information, where the second control information indicates the first resource on which the first data is retransmitted.

In some possible implementations, before the monitoring first data on a first resource, the method further includes:
monitoring the first data on a third resource, where the third resource is a resource preconfigured by the second device; and
if the first data is not received on the third resource, sending second acknowledgment information, where the second acknowledgment information indicates that the first data fails to be received.

In some possible implementations, the third resource preconfigured by the second device is used for initial transmission or retransmission.

In some possible implementations, the first resource and the third resource are resources included in a same periodic resource set, or the first resource and the third resource are resources included in different periodic resource sets.

In some possible implementations, the method further includes:
monitoring third acknowledgment information of the second data on a fourth resource associated with the first resource and/or the second resource.

In some possible implementations, a time offset of the fourth resource relative to the first resource is a second time offset, and/or a time offset of the fourth resource relative to the second resource is a third time offset.

In some possible implementations, the method further includes:

If the third acknowledgment information of the second data is received on the fourth resource, and the third acknowledgment information indicates that the second data fails to be received, resending the second data on a fifth resource.

In some possible implementations, a time offset of the fifth resource relative to the fourth resource is a fourth time offset, or after third acknowledgment information of the second data is received on the fourth resource, and the third acknowledgment information indicates that the second data fails to be received, the method further includes:
sending third control information, where the third control information indicates the fifth resource on which the second device resends the second data.

In some possible implementations, the method further includes:
monitoring, on a sixth resource, fourth acknowledgment information of the second data resent on the fifth resource, where
the third control information further indicates the sixth resource, or a time offset of the sixth resource relative to the fifth resource is a fifth time offset.

In some possible implementations, before the sending second data on a second resource associated with the first resource, the method further includes:
sending the second data on a seventh resource associated with the first resource; and
the sending second data on a second resource associated with the first resource includes:
   if the second data fails to be sent on the seventh resource, resending the second data on the second resource associated with the first resource.

It should be noted that, for descriptions of the second aspect, refer to descriptions of the first aspect. To avoid repetition, no detailed description is provided by using an example.

According to a third aspect, a communication apparatus for data transmission is provided. The communication apparatus is configured to perform the method in any possible implementation of the first aspect, or perform the method in any possible implementation of the second aspect, or perform another method described in embodiments of this application. Optionally, the communication apparatus may include units of the method described in any embodiment of this application. Optionally, the communication apparatus may include a processing unit and a transceiver unit. The transceiver unit may communicate with the outside, and the processing unit is configured to perform data processing. The transceiver unit may also be referred to as a communication interface or a communication unit.

The communication apparatus may be configured to perform an action performed by the first device in any possible implementation of the first aspect. In this case, the communication apparatus may be referred to as the first device. The transceiver unit is configured to perform a receiving and sending-related operation on the first device side in any possible implementation of the first aspect. The processing unit is configured to perform a processing-related operation on the first device side in any possible implementation of the first aspect.

The communication apparatus may be configured to perform an action performed by the second device in any possible implementation of the second aspect. In this case, the communication apparatus may be referred to as the second device. The transceiver unit is configured to perform a receiving and sending-related operation on the second device side in any possible implementation of the second aspect. The processing unit is configured to perform a processing-related operation on the second device side in any possible implementation of the second aspect.

According to a fourth aspect, a communication apparatus is provided. The communication apparatus includes a processor and a memory. The processor is coupled to the memory, the memory is configured to store a computer program or instructions, and the processor is configured to execute the computer program or the instructions stored in the memory, so that the method in the first aspect or any one of the possible implementations of the first aspect is performed, or the method in the second aspect or any one of the possible implementations of the second aspect is performed, or the method described in another embodiment of this application is performed.

For example, the processor is configured to execute the computer program or the instructions stored in the memory, so that the communication apparatus performs the method in the first aspect or any one of the possible implementations of the first aspect.

Optionally, the apparatus includes one or more processors.

Optionally, the apparatus may further include a memory coupled to the processor.

Optionally, the apparatus may include one or more memories.

Optionally, the memory and the processor may be integrated together or disposed separately.

Optionally, the apparatus may further include a transceiver.

According to a fifth aspect, a communication system is provided, where the communication system includes the communication apparatus configured to perform the method in any possible implementation of the first aspect and the communication apparatus configured to perform the method in any possible implementation of the second aspect in the third aspect; or the communication system includes the communication apparatus configured to perform the method in any possible implementation of the first aspect and the communication apparatus configured to perform the method in any possible implementation of the second aspect in the fourth aspect.

According to a sixth aspect, a computer-readable storage medium is provided, where the computer-readable storage medium stores a computer program (or may be referred to as instructions or code) configured to implement the method in the first aspect or any one of the possible implementations of the first aspect.

For example, when the computer program is executed by a computer, the computer is enabled to perform the method in the first aspect or any one of the possible implementations of the first aspect. The computer may be a communication apparatus.

For another example, when the computer program is executed by a computer, the computer is enabled to perform the method in the second aspect or any one of the possible implementations of the second aspect. The computer may be a communication apparatus.

According to a seventh aspect, this application provides a chip, including a processor. The processor is configured to read and execute a computer program stored in the memory, to perform the method in the first aspect and any possible implementation of the first aspect, or perform the method in the second aspect and any possible implementation of the second aspect, or perform the method described in another embodiment of this application.

Optionally, the chip further includes a memory, the memory and the processor are connected by using a circuit or a wire.

According to an eighth aspect, this application provides a computer program product, where the computer program product includes a computer program (which may also be referred to as instructions or code), and when the computer program is executed by a computer, the computer implements the method in the first aspect or any one of the possible implementations of the first aspect; or when the computer program is executed by a computer, the computer implements the method in the second aspect or any one of the possible implementations of the second aspect; or when the computer program is executed by a computer, the computer implements the method in any one of embodiments of this application.

According to a ninth aspect, this application provides a communication apparatus, including units configured to implement the method in any embodiment of this application.

### BRIEF DESCRIPTION OF DRAWINGS

FIG. 1 is a schematic diagram of a communication system according to an embodiment of this application;
FIG. 2 is a schematic diagram of a data transmission method according to an embodiment of this application;
FIG. 3 is a schematic diagram of a resource relationship according to an embodiment of this application;
FIG. 4 is a schematic diagram of another resource relationship according to an embodiment of this application;
FIG. 5 is a schematic diagram of another data transmission method according to an embodiment of this application;
FIG. 6 is a schematic diagram of still another resource relationship according to an embodiment of this application;
FIG. 7 is a schematic diagram of still another data transmission method according to an embodiment of this application;
FIG. 8 is a schematic diagram of still another resource relationship according to an embodiment of this application;
FIG. 9 is a schematic diagram of still another resource relationship according to an embodiment of this application;
FIG. 10 is a schematic diagram of still another data transmission method according to an embodiment of this application;
FIG. 11 is a schematic diagram of still another resource relationship according to an embodiment of this application;
FIG. 12 is a schematic diagram of still another resource relationship according to an embodiment of this application;
FIG. 13 is a schematic diagram of still another data transmission method according to an embodiment of this application;
FIG. 14 is a schematic diagram of still another resource relationship according to an embodiment of this application;
FIG. 15 is a schematic diagram of still another data transmission method according to an embodiment of this application;
FIG. 16 is a schematic diagram of still another resource relationship according to an embodiment of this application; and
FIG. 17 is a schematic block diagram of a data transmission apparatus according to an embodiment of this application.

### DESCRIPTION OF EMBODIMENTS

The following describes the technical solutions in embodiments of this application with reference to the accompanying drawings in embodiments of this application.

It should be understood that, division into manners, cases, categories, and embodiments in embodiments of this application is merely for ease of description, and should not constitute a special limitation. Features in various manners, categories, cases, and embodiments may be combined without contradiction.

It should be further understood that "first", "second", and "third" in embodiments of this application are merely used for differentiation, and should not constitute any limitation on this application. It should be further understood that sequence numbers of processes do not mean execution sequences in various embodiments of this application. The execution sequences of the processes should be determined according to functions and internal logic of the processes, and should not be construed as any limitation on the implementation processes of embodiments of this application.

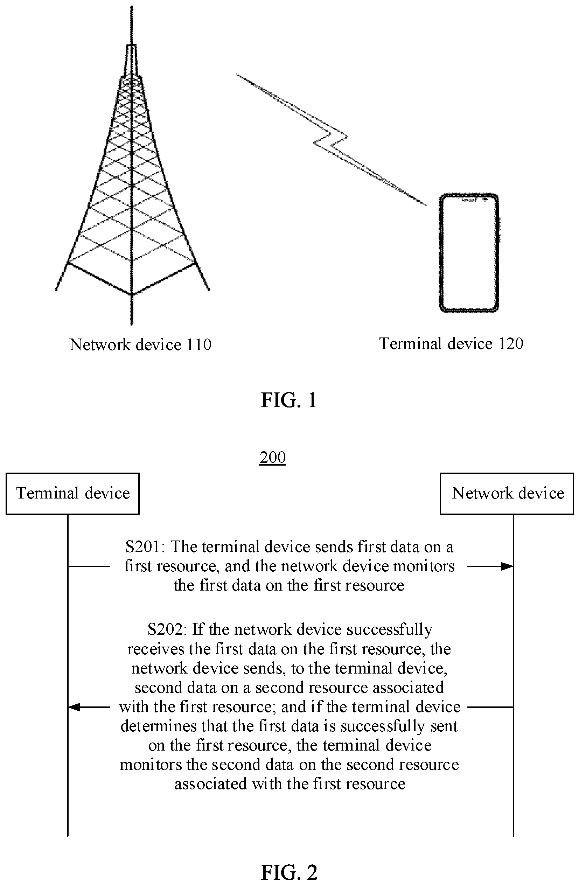

FIG. 1 is a schematic diagram of a communication system to which an embodiment of this application is applicable. As shown in FIG. 1, a wireless communication system may include a network device 110 that communicates with one or more terminal devices (for example, a terminal device 120 shown in FIG. 1). When the network device 110 sends a signal, the network device 110 is a transmit end, and the terminal device 120 is a receive end. On the contrary, when the terminal device 120 sends a signal, the terminal device 120 is a transmit end, and the network device 110 is a receive end.

The network device 110 may be an access network device configured to communicate with the terminal device 120. The access network device may be a base transceiver station (base transceiver station, BTS) in a GSM system or a CDMA system, or may be a NodeB (NodeB, NB) in a WCDMA system, or may further be an evolved NodeB (evolved NodeB, eNB or eNodeB) in an LTE system, or may be a radio controller in a cloud radio access network (cloud radio access network, CRAN) scenario, or may be a gNodeB (gNodeB, gNB) in a 5th generation mobile communication technology (5th generation mobile communication technology, 5G), that is, new radio (new radio, NR) access, or may be a base station in another future network system. Alternatively, the network device 110 may be a relay station, an access point, a vehicle-mounted device, a wearable device, a network device in a future 5G network, a network device in a future evolved PLMN network, or the like. This is not limited in embodiments of this application.

The terminal device 120 may be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an vehicle-mounted device, a handheld device, a wearable device, a computing device, a terminal in a form of a portable device, a vehicle-mounted device, or the like, a smartphone, smart glasses, a terminal device in a 5G network, a terminal device in a future evolved public land mobile network (public land mobile network, PLMN), or the like. This is not limited in embodiments of this application.

It may be understood that the network device 110 in FIG. 1 may alternatively be replaced with a terminal device. In other words, an embodiment of this application is applied to a direct communication scenario like a device-to-device (device-to-device, D2D) scenario. For example, an embodiment of this application may be applied to a vehicle-to-everything (vehicle-to-everything, V2X) communication scenario.

For ease of description, a device number is omitted in the following. For example, "the terminal device" indicates "the terminal device 120", and "the network device" indicates "the network device 110".

After a first device sends data to a second device, the second device usually needs to feed back data to the first device. Because the first device does not know when the second device feeds back the data, in a downlink (downlink, DL) receiving scenario, in a possible implementation, the first device keeps blindly detecting (or referred to as monitoring, detecting, and listening to) the data from the second device. Therefore, power consumption of the first device is high. In another possible implementation, the first device periodically detects the data from the second device in a DRX manner. Similarly, power consumption in this manner is high. In addition, when energy of the first device is insufficient, a loss of downlink data may further occur.

In embodiments of this application, the first device sends first data to the second device on a first resource. After the second device monitors the first data on the first resource, the second device sends second data to the first device on a second resource associated with the first resource, and the first device monitors the second data from the second device on the second resource associated with the first resource. In this way, the first device does not need to continuously perform detection, and needs to only monitor the second data on the second resource, thereby reducing power consumption. In addition, for the energy harvesting first device, due to energy limitation, the first device can only transmit intermittently. To avoid a loss of downlink data, the first device may send the first data to the second device on the first resource when energy is sufficient. In this way, energy when the first device receives the second data on the second resource associated with the first resource is also sufficient, so that a loss of downlink data can be avoided.

In embodiments of this application, the first device may be a terminal device, and the second device may be a network device. Alternatively, in the D2D scenario, the first device is a terminal device, and the second device may be another terminal device. In the following embodiments, an example in which the first device is the terminal device and the second device is the network device is used for description.

The following describes a data transmission method in an embodiment of this application with reference to the accompanying drawings. As shown in FIG. 2, a method 200 includes the following steps.

S201: A terminal device sends first data on a first resource, and a network device monitors the first data on the first resource.

Optionally, the first resource may be a resource preconfigured by the network device for the terminal device. Optionally, the network device may configure a periodic uplink resource set for the terminal device, where the periodic uplink resource set includes one or more uplink resources, and the one or more uplink resources include the first resource. In other words, if the terminal device has uplink data to send, the terminal device may select the first resource from the periodic uplink resource set preconfigured by the network device.

For example, the configured periodic uplink resource set may be of a configured grant type 1 (configured grant type 1) or a configured grant type 2 (configured grant type 2).

Optionally, that the network device may configure a periodic uplink resource set for the terminal device may include: The network device configures, for the terminal device, an uplink resource period, a time-frequency location of an uplink resource, or at least one hybrid automatic repeat request (hybrid automatic repeat request, HARQ) in a process corresponding to the uplink resource. For example, the network device may preconfigure the periodic uplink resource set for the terminal device by sending configuration information to the terminal device.

Optionally, the network device may preconfigure the periodic uplink resource set for the terminal device when the terminal device is in a radio resource control (radio resource control, RRC) connected (connected) state. If the terminal device is in the RRC connected state and has uplink data to transmit, step S201 is performed. Alternatively, step S201 may be performed when the terminal device is in an RRC inactive (inactive) state and has uplink small data to transmit. In other words, the first data in step S201 may alternatively be small data, and a data amount of the small data is less than a preset value.

Optionally, the first resource may be a resource dynamically scheduled or semi-persistently scheduled by the network device. In other words, when the network device learns that the terminal has uplink data to send, the network device may dynamically schedule the first resource, for example, dynamically schedule the first resource by using downlink control information (downlink control information, DCI), or activate the first resource in a semi-persistent scheduling manner.

Optionally, the terminal device may be an energy harvesting (energy harvesting) terminal device. Because energy is not continuously provided, the data is transmitted intermittently. When energy of the terminal device is sufficient, for example, remaining energy of the terminal device is greater than a preset energy value, step S201 may be performed. In this way, after sending the first data, the terminal device has sufficient energy to receive the downlink second data, thereby avoiding a loss of downlink second data.

For example, for a terminal device having an energy harvesting function, a service feature of the terminal device may include: communication is mainly about uplink data of the terminal device, for example, the terminal device uploads locally sensed/collected data, and the data is mainly characterized by periodicity; or uplink data of the terminal device is usually accompanied by downlink feedback (acknowledgment (acknowledgment, ACK) feedback for a transmission control protocol (transmission control protocol, TCP)).

The energy harvesting terminal device means that the terminal device may convert weak energy into electric energy and store the electric energy in a battery for use by the terminal device. For example, the terminal device may convert light energy, kinetic energy, heat energy, radio frequency energy, or the like into electric energy and store the electric energy in the battery. In this way, a problem in which a service life of the terminal device is limited because it is difficult for the terminal device to replace a battery can be resolved. In a 5G NR communication system, the terminal device may have the energy harvesting function. For example, a sensor (a temperature sensor, a watch, a gas meter, or a smoke sensor) included in the terminal device may have the energy harvesting function. For another example, the terminal device may be a wearable terminal device, and the wearable device may be a medical wearable device, a livestock farm management device, a pet tracking device, or the like. These wearable devices may also have the energy harvesting function.

For the energy harvesting terminal device, if energy of the terminal device is sufficient, the terminal device can maintain communication for a period of time. If energy of the terminal device is insufficient, and no power is supplied through plug-in, the energy of the terminal device is insufficient, the terminal device may be powered off, and therefore cannot perform communication. In other words, intermittent communication is the service feature of the energy harvesting terminal device. In some embodiments, a service of the energy harvesting terminal device is a periodic service. For example, the terminal device may be a smoke alarm, and the smoke alarm needs to periodically report a smoke amount of an environment in which the smoke alarm is located.

S202: If the network device successfully receives the first data on the first resource, the network device sends, to the terminal device, the second data on the second resource associated with the first resource; and if the terminal device determines that the first data is successfully sent on the first resource, the terminal device monitors the second data on the second resource associated with the first resource.

Optionally, the second resource may be associated with the first resource in time domain. Optionally, the association between the second resource and the first resource in time domain may be that a time offset (offset) of the second resource relative to the first resource is a first time offset. Optionally, a protocol may specify the first time offset, or the network device may configure the first time offset for the terminal device. Optionally, the network device may preconfigure the first time offset or configures the first time offset in real time for the terminal device. Time at which the network device configures the first time offset is not limited in embodiments of this application.

Optionally, the second resource may be associated with the first resource in frequency domain. Optionally, the association between the second resource and the first resource in frequency domain may be that a frequency offset of the second resource relative to the first resource is a carrier offset of a first carrier quantity. Optionally, a protocol may specify the carrier offset of the first carrier quantity, or the network device may configure the carrier offset of the first carrier quantity for the terminal device. Optionally, the network device preconfigures the carrier offset of the first carrier quantity or configures the carrier offset of the first carrier quantity in real time for the terminal device. Time at which the network device configures the carrier offset of the first carrier quantity is not limited in embodiments of this application.

Optionally, the second resource may be associated with the first resource in time domain and frequency domain. Optionally, the associations between the second resource and the first resource in time domain and frequency domain may be that a time offset of the second resource relative to the first resource is a first time offset, and a frequency offset of the second resource relative to the first resource is a carrier offset of a first carrier quantity. Optionally, a protocol may specify the carrier offset of the first carrier quantity and the first time offset, or a network device may configure the carrier offset of the first carrier quantity and the first time offset for a terminal device. The network device may preconfigure the carrier offset of the first carrier quantity and the first time offset or may configure the carrier offset of the first carrier quantity and the first time offset in real time for the terminal device.

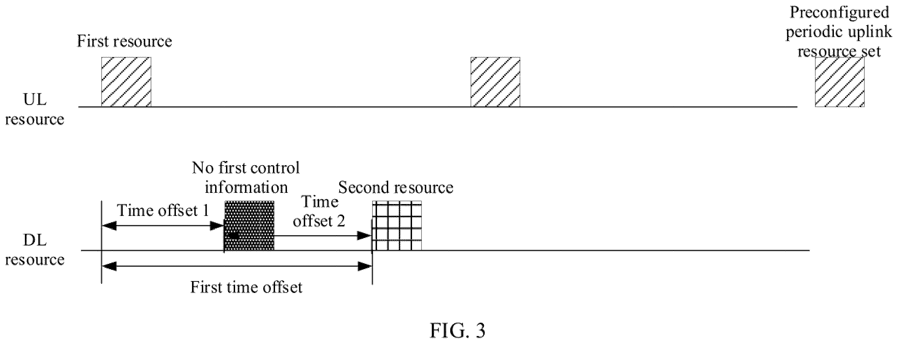

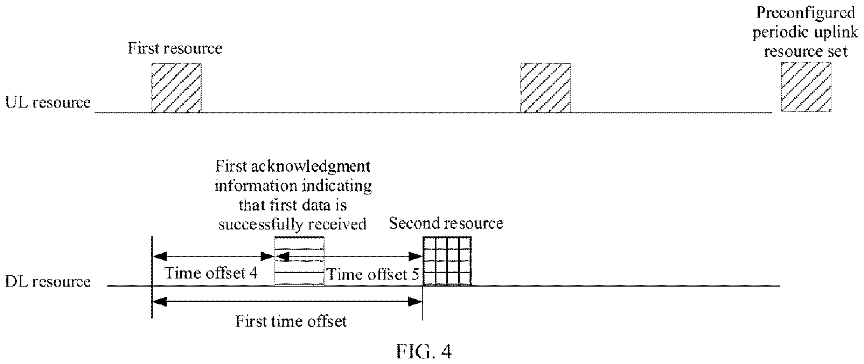

Optionally, before step S202, the method further includes: The network device configures at least one of a time domain length or a frequency domain location of a downlink resource associated with an uplink resource for the terminal device. Optionally, the network device may configure at least one of the time domain length or the frequency domain location of the downlink resource for the terminal device when the terminal device is in the RRC connected state. In other words, after the first data is successfully sent on the first resource, the terminal device determines a time domain location of the second resource based on the time domain length that is of the downlink resource and that is configured by the network device, the first resource, and the first time offset, and determines the second resource based on the time domain location and the configured frequency domain location. Optionally, that the terminal device determines a time domain location of the second resource based on the time domain length that is of the downlink resource and that is configured by the network device, the first resource, and the first time offset includes: The terminal device determines a time domain start location of the second resource based on a time domain start location of the first resource and the first time offset, and the terminal device determines the time domain location of the second resource based on the time domain start location of the second resource and the time domain length of the downlink resource. Alternatively, that the terminal device determines a time domain location of the second resource based on the time domain length that is of the downlink resource and that is configured by the network device, the first resource, and the first time offset includes: The terminal device determines a time domain end location of the second resource based on a time domain end location of the first resource and the first time offset, and the terminal device determines the time domain location of the second resource based on the time domain end location of the second resource and the time domain length of the downlink resource. For example, as shown in FIG. 3 and FIG. 4, a frequency domain location of the second resource is configured by the network device, the time domain start location of the second resource is obtained based on the time domain start location of the first resource and the first time offset, and a time domain length of the second resource is configured by the network device. Alternatively, in FIG. 3 and FIG. 4, the time domain end location of the second resource is obtained based on the time domain end location of the first resource and the first time offset. This is not shown in FIG. 3 and FIG. 4.

Optionally, the network device may simultaneously configure at least two of the following for the terminal device: the periodic uplink resource set, the time domain length of the downlink resource associated with the uplink resource, and the frequency domain location of the downlink resource associated with the uplink resource. Alternatively, the network device may separately configure at least one of the following: the periodic uplink resource set, the time domain length of the downlink resource associated with the uplink resource, and the frequency domain location of the downlink resource associated with the uplink resource. In other words, the network device may simultaneously configure the uplink resource and the downlink resource associated with the uplink resource, or separately configure the uplink resource and the downlink resource associated with the uplink resource. In addition, if the first time offset is configured by the network device, the network device may simultaneously configure at least two of the following: the periodic uplink resource set, the time domain length of the downlink resource associated with the uplink resource, the frequency domain location of the downlink resource associated with the uplink resource, and the first time offset. Alternatively, the network device may separately configure at least one of the following: the periodic uplink resource set, the time domain length of the downlink resource associated with the uplink resource, the frequency domain location of the downlink resource associated with the uplink resource, and the first time offset.

If the network device successfully receives the first data on the first resource, the network device may use any one of the following implementations.

Manner 1: The network device does not send first control information indicating the terminal device to retransmit the first data. If the terminal device does not receive the first control information, the terminal device determines that the first data is successfully sent on the first resource. For example, the first control information may be first DCI.

Optionally, a resource on which the network device sends the first control information is associated with the first resource. For example, as shown in FIG. 3, a time offset of the resource on which the network device sends the first control information relative to the first resource is a time offset 1. If the network device successfully receives the first data on the first resource, the network device does not send the first control information on the resource on which the first control information is sent. The terminal device determines, based on the first resource and the time offset 1, a resource on which the first control information is monitored. If the terminal device does not obtain, through monitoring, the first control information on the resource on which the first control information is monitored, the terminal device determines that the first data is successfully sent on the first resource. Therefore, the terminal device monitors the downlink second data on the second resource that is offset by the first time offset from the first resource.

Optionally, a protocol may specify the time offset 1, or the network device may configure the time offset 1 for the terminal device, or the terminal device may obtain the time offset 1 based on a time offset 2 and the first time offset. For example, the time offset 1 is a difference between the first time offset and the time offset 2. Optionally, the time offset 1 is less than the first time offset. For example, as shown in FIG. 3, a length of the time offset 1 is less than a length of the first time offset.

Optionally, after the terminal device determines that the first data is successfully sent on the first resource, the terminal device monitors the downlink second data on the second resource that is offset by the time offset 2 from the determined resource on which the first control information is monitored. The protocol may specify the time offset 2, or the network device may configure the time offset 2 for the terminal device, or the terminal device may obtain the time offset 2 based on the time offset 1 and the first time offset. For example, the time offset 2 is a difference between the first time offset and the time offset 1. Optionally, the time offset 2 is less than the first time offset. For example, as shown in FIG. 3, a length of the time offset 2 is less than the length of the first time offset.

It should be noted that the terminal device may learn the time offset 1 and the first time offset according to the protocol or from the network device, and obtain the time offset 2 based on the first time offset and the time offset 1; or the terminal device may learn the time offset 2 and the first time offset according to the protocol or from the network device, and obtain the time offset 1 based on the first time offset and the time offset 2; or the terminal device may learn the time offset 1 and the time offset 2 according to the protocol or from the network device, and obtain the first time offset based on the time offset 1 and the time offset 2. In other words, the terminal device may learn two values of the time offset 1, the time offset 2, and the first time offset according to the protocol or from the network device, and obtain the other value based on the learned two values. Alternatively, the terminal device may directly learn the time offset 1, the time offset 2, and the first time offset according to the protocol or from the network device.

Optionally, a location at which the network device sends the first control information is associated with the first resource. For example, the location at which the first control information is sent is in a first time window after the first resource. If the network device successfully receives the first data on the first resource, the network device does not send the first control information in the first time window. The terminal device determines, based on the first resource, the first time window in which the first control information is monitored. If the terminal device does not obtain the first control information through monitoring in the first time window, the terminal device determines that the first data is successfully sent on the first resource. Therefore, the terminal device monitors the downlink second data on the second resource that is offset by the first time offset from the first resource, or the terminal device monitors the downlink second data after first preset duration after an end moment of the first time window. Optionally, the first preset duration may be specified in the protocol or configured by the network device.

Optionally, the protocol may specify a configuration of the first time window, or the network device may send a configuration of the first time window to the terminal device. The configuration of the first time window includes one or more of a length of the first time window and a time offset 3 of the first time window relative to the first resource. Optionally, a length of the time offset 3 is less than the length of the first time offset.

It may be understood that the length of the time offset 3 may be greater than or equal to 0 and less than the length of the first time offset. In other words, if the time offset 3 is equal to 0, a time domain end moment of the first resource is a start moment of the first time window, or if the time offset 3 is greater than 0, a moment that is offset by the time offset 3 from the time domain end moment of the first resource is the start moment of the first time window. Optionally, if the protocol does not specify the time offset 3 of the first time window relative to the first resource, or the network device does not configure the time offset 3 of the first time window relative to the first resource, the time domain end moment of the first resource may be considered as the start moment of the first time window by default.

Manner 2: The network device sends first acknowledgment information, where the first acknowledgment information indicates that the first data is successfully received. The terminal device receives the first acknowledgment information, and determines, based on the first acknowledgment information, that the first data is successfully sent on the first resource. For example, the first acknowledgment information may be an ACK, and a resource on which the network device sends the first acknowledgment information is a DL HARQ resource.

Optionally, the resource on which the network device sends the first acknowledgment information is associated with the first resource. For example, as shown in FIG. 4, a time offset of the resource on which the network device sends the first acknowledgment information relative to the first resource is a time offset 4. If the network device successfully receives the first data on the first resource, the network device determines, based on the first resource and the time offset 4, the resource on which the first acknowledgment information is sent, and sends the first acknowledgment information on the determined resource. The terminal device determines, based on the first resource and the time offset 4, a resource on which the first acknowledgment information is monitored. If the terminal device obtains, through monitoring, the first acknowledgment information on the determined resource, and the first acknowledgment information indicates that the first data is successfully received, the terminal device determines that the first data is successfully sent on the first resource. Therefore, the terminal device monitors the downlink second data on the second resource that is offset by the first time offset from the first resource.

Optionally, the protocol may specify the time offset 4, or the network device may configure the time offset 4 for the terminal device. Optionally, the time offset 4 is less than the first time offset. For example, as shown in FIG. 4, a length of the time offset 4 is less than the length of the first time offset.

Optionally, after the terminal device determines that the first data is successfully sent on the first resource, the terminal device monitors the downlink second data on the second resource that is offset by a time offset 5 from the determined resource on which the first acknowledgment information is monitored. The protocol may specify the time offset 5, or the network device may configure the time offset 5 for the terminal device, or the terminal device may obtain the time offset 5 based on the time offset 4 and the first time offset. For example, the time offset 5 is a difference between the first time offset and the time offset 4. Optionally, the time offset 5 is less than the first time offset. For example, as shown in FIG. 4, a length of the time offset 5 is less than the length of the first time offset.

It should be noted that the terminal device may learn the time offset 4 and the first time offset according to the protocol or from the network device, and obtain the time offset 5 based on the first time offset and the time offset 4; or the terminal device may learn the time offset 5 and the first time offset according to the protocol or from the network device, and obtain the time offset 4 based on the first time offset and the time offset 5; or the terminal device may learn the time offset 4 and the time offset 5 according to the protocol or from the network device, and obtain the first time offset based on the time offset 4 and the time offset 5. In other words, the terminal device may learn two values of the time offset 4, the time offset 5, and the first time offset according to the protocol or from the network device, and obtain the other value based on the learned two values. Alternatively, the terminal device may directly learn the time offset 4, the time offset 5, and the first time offset according to the protocol or from the network device.

Optionally, a location at which the network device sends the first acknowledgment information is associated with the first resource. For example, the location at which the first acknowledgment information is sent is in a second time window after the first resource. If the network device successfully receives the first data on the first resource, the network device does not send the first acknowledgment information in the second time window. The terminal device determines, based on the first resource, the second time window in which the first acknowledgment information is monitored. If the terminal device does not obtain the first acknowledgment information through monitoring in the second time window, the terminal device determines that the first data is successfully sent on the first resource. Therefore, the terminal device monitors the downlink second data on the second resource that is offset by the first time offset from the first resource, or the terminal device monitors the downlink second data after second preset duration after an end moment of the second time window. Optionally, the second preset time may be specified in the protocol or configured by the network device.

Optionally, the protocol may specify a configuration of the second time window, or the network device may send a configuration of the second time window to the terminal device. The configuration of the second time window includes one or more of a length of the second time window and a time offset 6 of the second time window relative to the first resource. Optionally, a length of the time offset 6 is less than the length of the first time offset.

It may be understood that the length of the time offset 6 may be greater than or equal to 0 and less than the length of the first time offset. In other words, if the time offset 6 is equal to 0, a time domain end moment of the first resource is a start moment of the second time window, or if the time offset 6 is greater than 0, a moment that is offset by the time offset 6 from the time domain end moment of the first resource is the start moment of the second time window. Optionally, if the protocol does not specify the time offset 6 of the second time window relative to the first resource, or the network device does not configure the time offset 6 of the second time window relative to the first resource, the time domain end moment of the first resource may be considered as the start moment of the second time window by default.

Optionally, after successfully receiving the first data on the first resource, the network device may determine the second resource based on an association between the second resource and the first resource, and send the second data on the second resource. For example, if a time offset of the second resource relative to the first resource is the first time offset, after the network device successfully receives the first data on the first resource, a moment at which the time domain start location of the first resource is offset by the first time offset is a time domain start location of the second resource. The network device determines a time domain location of the second resource based on the time domain length that is of the downlink resource and that is configured for the terminal device and the time domain start location of the second resource, and determines a frequency domain location of the second resource based on the frequency domain location of the downlink resource configured for the terminal device. If the first data of the terminal device is successfully sent on the first resource, the terminal device may determine the second resource based on the association between the second resource and the first resource, and monitor the second data on the second resource. For example, if the time offset of the second resource relative to the first resource is the first time offset, and the first data of the terminal device is successfully sent on the first resource, the moment at which the time domain start location of the first resource is offset by the first time offset is the time domain start location of the second resource. The terminal device determines the time domain location of the second resource based on the time domain length that is of the downlink resource and that is configured for the terminal device and the time domain start location of the second resource, and determines the frequency domain location of the second resource based on the frequency domain location of the downlink resource configured for the terminal device.

Optionally, the second data corresponds to the first data. Optionally, the second data may be feedback data of the first data. In other words, the second data is downlink feedback data of the uplink first data. Optionally, the second data may be transmission control protocol (transmission control protocol, TCP) feedback data of the first data.

It should be noted that step S202 is an optional step. The terminal device may directly monitor the second data on the second resource associated with the first resource without determining whether the first data is successfully sent.

In the foregoing method 200, the terminal device may send the first data on the first resource, and the network device monitors the first data on the first resource. If the network device successfully receives the first data on the first resource, the network device sends the second data on the second resource associated with the first resource. If the terminal device determines that the first data is successfully sent on the first resource, the terminal device monitors the data on the second resource associated with the first resource. In this way, power consumption caused by continuous blind detection on the downlink data by the terminal device can be avoided, or overheads caused by detection on the downlink data by the terminal device in a DRX manner can be avoided.

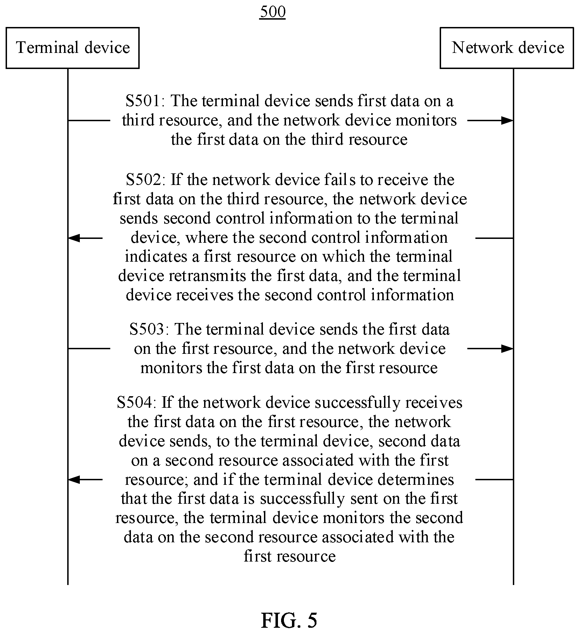

As described in the method 200, the first data is successfully sent on the first resource. In some scenarios, the first data may fail to be sent. For example, the first data may fail to be sent due to link quality deterioration, or the network device may fail to decode the first data. With reference to a method 500 in FIG. 5, the following describes a case in which the terminal device fails to send the first data. The method 500 includes the following steps.

S501: A terminal device sends first data on a third resource, and a network device monitors the first data on the third resource.

Optionally, the third resource may be a resource preconfigured by the network device for the terminal device. Optionally, the network device may configure a periodic uplink resource set for the terminal device, where the periodic uplink resource set includes one or more uplink resources, and the one or more uplink resources include the third resource. In other words, if the terminal device has uplink data to send, the terminal device may select the third resource from the periodic uplink resource set preconfigured by the network device.

For example, the configured periodic uplink resource set may be of a configured grant type 1 (configured grant type 1) or a configured grant type 2 (configured grant type 2).

Optionally, that the network device preconfigures a periodic uplink resource set for the terminal device may include: The network device configures, for the terminal device, an uplink resource period, a time-frequency location of an uplink resource, or at least one hybrid automatic repeat request (hybrid automatic repeat request, HARQ) in a process corresponding to the uplink resource. For example, the network device may preconfigure the periodic uplink resource set for the terminal device by sending configuration information to the terminal device.

Optionally, the network device may preconfigure the periodic uplink resource set for the terminal device when the terminal device is in an RRC connected state. If the terminal device is in the RRC connected state and has uplink data to transmit, step S501 is performed. Alternatively, step S501 may be performed when the terminal device is in an RRC inactive (inactive) state and has uplink small data to transmit. In other words, the first data in step S501 may alternatively be small data, and a data amount of the small data is less than a preset value.

Optionally, the third resource may be a resource dynamically scheduled or semi-persistently scheduled by the network device. In other words, when the network device learns that the terminal has uplink data to send, the network device may dynamically schedule the third resource (for example, dynamically schedule the third resource by using downlink control information) or activate the third resource in a semi-persistent scheduling manner.

Optionally, the terminal device may be an energy harvesting terminal device. When energy of the terminal device is sufficient, for example, remaining energy of the terminal device is greater than a preset energy value, step S501 may be performed. In this way, after sending the first data, the terminal device has sufficient energy to receive the downlink second data, thereby avoiding a loss of downlink second data.

S502: If the network device fails to receive the first data on the third resource, the network device sends second control information to the terminal device, where the second control information indicates a first resource on which the terminal device retransmits the first data, and the terminal device receives the second control information.

For example, the second control information may be second DCI.

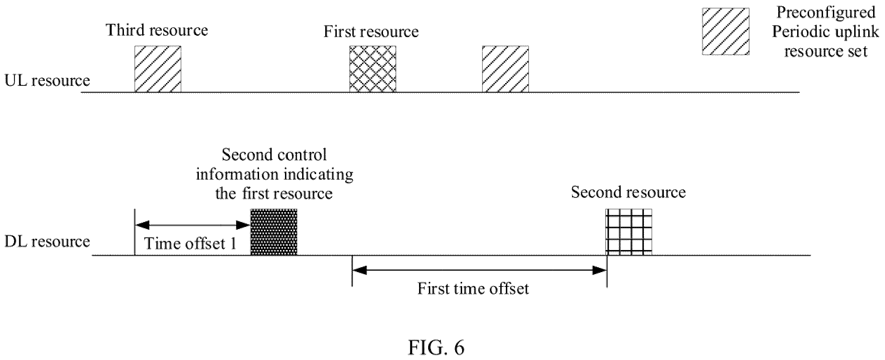

Optionally, a resource on which the network device sends the second control information is associated with the third resource. For example, as shown in FIG. 6, a time offset of the resource on which the network device sends the second control information relative to the third resource is a time offset 1. If the network device fails to receive the first data on the third resource, the network device determines, based on the third resource and the time offset 1, the resource on which the second control information is sent, and sends the second control information on the determined resource on which the second control information is sent. The terminal device determines, based on the third resource and the time offset 1, a resource on which the second control information is monitored. If the terminal device obtains, through monitoring, the second control information on the resource on which the second control information is monitored, and the second control information indicates the first resource on which the terminal device retransmits the first data, the terminal device determines that the first data fails to be sent on the third resource.

Optionally, a protocol may specify the time offset 1, or the network device may configure the time offset 1 for the terminal device. Optionally, the time offset 1 is less than a first time offset, and a length of the time offset 1 is less than a length of the first time offset.

Optionally, a location at which the network device sends the second control information is associated with the third resource. For example, the location at which the second control information is sent is in a first time window after the third resource. If the network device fails to receive the first data on the third resource, the network device determines, in the first time window, to send the second control information. The terminal device determines, based on the third resource, the first time window in which the second control information is monitored. If the terminal device obtains, through monitoring, the second control information in the first time window, and the second control information indicates the first resource on which the terminal device retransmits the first data, the terminal device determines that the first data fails to be sent on the third resource.

Optionally, the protocol may specify a configuration of the first time window, or the network device may send a configuration of the first time window to the terminal device. The configuration of the first time window includes one or more of a length of the first time window and a time offset 3 of the first time window relative to the third resource.

It may be understood that a length of the time offset 3 may be greater than or equal to 0. In other words, if the time offset 3 is equal to 0, a time domain end moment of the third resource is a start moment of the first time window, or if the time offset 3 is greater than 0, a moment that is offset by the time offset 3 from the time domain end moment of the third resource is the start moment of the first time window. Optionally, if the protocol does not specify the time offset 3 of the first time window relative to the third resource, or the network device does not configure the time offset 3 of the first time window relative to the third resource, the time domain end moment of the third resource may be considered as the start moment of the first time window by default.

It should be noted that if the first data is successfully sent on the third resource, the method is the same as the method 200. In other words, if the first data is successfully sent on the first resource, the first resource in the method 200 is the third resource in the method 500.

S503: The terminal device sends the first data on the first resource indicated by the second control information, and the network device monitors the first data on the first resource indicated by first control information.

S504: If the network device successfully receives the first data on the first resource, the network device sends, to the terminal device, the second data on a second resource associated with the first resource; and if the terminal device determines that the first data is successfully sent on the first resource, the terminal device monitors the second data on the second resource associated with the first resource.

Specifically, for step S503 and step S504, refer to descriptions of step S201 and step S202.

Optionally, if the network device fails to receive the first data on the first resource, or the terminal device fails to send the first data on the first resource, step S502 may be repeatedly performed. In other words, if the terminal device fails to retransmit the first data on the first resource, the network device may continue to send control information to indicate a resource used for another retransmission, and retransmit the first data for another time on the resource used for another retransmission. Optionally, the network device may configure a quantity of retransmission times.

Optionally, the third resource in step S501 may be a resource on which the first data is initially transmitted, or may be a resource on which the first data is retransmitted. In other words, the method 500 may be retransmission after an initial transmission failure, or may be a plurality of times of retransmission after an initial transmission failure and a retransmission failure.

Different from step S202, the first resource is the first resource indicated by the second control information, and the first resource in step S202 is a resource configured by the network device. In other words, in the method 500, after the terminal device fails to transmit the first data on the third resource, the network device may send the second control information to indicate the first resource, and the terminal device may retransmit the first data on the indicated first resource.

In the method 500, after failing to send the first data on the third resource, the terminal device may receive the second control information, and retransmit the first data on the first resource indicated by the second control information. If the first data is successfully retransmitted, the terminal device monitors the downlink second data on the second resource associated with the first resource. In this way, power consumption caused by continuous blind detection on the downlink data by the terminal device, or overheads caused by the terminal device receiving and detecting the downlink data by using the DRX function can be avoided.

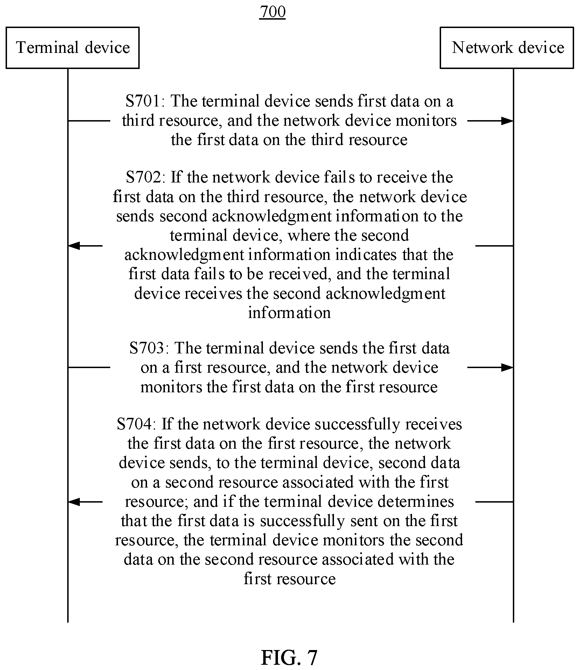

The following describes another case in which the first data fails to be sent with reference to a method 700 in FIG. 7. The method 700 includes:
S701: A terminal device sends first data on a third resource, and a network device monitors the first data on the third resource.

Specifically, for step S701, refer to descriptions of step S501.

The following describes two cases in which the network device configures a periodic uplink resource.

In a case 1, the network device may configure a periodic uplink resource set for the terminal device, where the periodic uplink resource set includes one or more uplink resources, and the one or more uplink resources include the third resource and a first resource. In other words, if the terminal device has uplink data to send, the terminal device may select the third resource from the periodic uplink resource set preconfigured by the network device.

For example, the configured periodic uplink resource set may be of a configured grant type 1 (configured grant type 1) or a configured grant type 2 (configured grant type 2).

Optionally, that the network device preconfigures a periodic uplink resource set for the terminal device may include: The network device configures, for the terminal device, an uplink resource period, a time-frequency location of an uplink resource, or at least one HARQ in a process corresponding to the uplink resource. For example, the network device may preconfigure the periodic uplink resource set for the terminal device by sending configuration information to the terminal device.

Optionally, the network device may preconfigure the periodic uplink resource set for the terminal device when the terminal device is in an RRC connected (connected) state. If the terminal device is in the RRC connected state and has uplink data to transmit, step S701 is performed. Alternatively, step S701 may be performed when the terminal device is in an RRC inactive (inactive) state and has uplink small data to transmit. In other words, the first data in step S701 may alternatively be small data, and a data amount of the small data is less than a preset value.

In a case 2, the network device may configure a first periodic uplink resource set and a second periodic uplink resource set for the terminal device, where the first periodic uplink resource set includes one or more uplink resources, the one or more uplink resources include the third resource, and the second periodic uplink resource set includes the first resource. In other words, if the terminal device has uplink data to send, the terminal device may select the third resource from the first periodic uplink resource set preconfigured by the network device. If the terminal device needs to retransmit the first data, the terminal device may select the first resource from the second periodic uplink resource set preconfigured by the network device. For example, the network device may preconfigure the first periodic uplink resource set and the second periodic uplink resource set for the terminal device by sending configuration information to the terminal device.

For example, the configured first periodic uplink resource set may be of a configured grant type 1 (configured grant type 1) or a configured grant type 2 (configured grant type 2).

For example, the configured second periodic uplink resource set may be of a configured grant type 1 (configured grant type 1) or a configured grant type 2 (configured grant type 2).

Optionally, a resource included in the first periodic uplink resource set is used for initial transmission, and a resource included in the second periodic uplink resource set is used for retransmission.

Optionally, the network device may preconfigure the first periodic uplink resource set and the second periodic uplink resource set for the terminal device when the terminal device is in the RRC connected state.

In other words, in the foregoing case 1, the network device configures a periodic resource set, and a resource included in the configured periodic resource set may be used for the initial transmission or may be used for the retransmission. In case 2, the network device configures two periodic resource sets, where the first periodic uplink resource set is used for the initial transmission, and the second periodic uplink resource set is used for the retransmission. If the terminal device needs to initially transmit data, the terminal device determines a resource used for the initial transmission in the first periodic uplink resource set. If the terminal device needs to retransmit the data, the terminal device determines a resource used for the retransmission in the second periodic uplink resource set.

Optionally, the third resource may be a resource dynamically scheduled or semi-persistently scheduled by the network device. In other words, when the network device learns that the terminal has uplink data to send, the network device may dynamically schedule the third resource, for example, dynamically schedule the third resource by using DCI, or activate the third resource in a semi-persistent scheduling manner.

S702: If the network device fails to receive the first data on the third resource, the network device sends second acknowledgment information to the terminal device, where the second acknowledgment information indicates that the first data fails to be received, and the terminal device receives the second acknowledgment information. For example, the second acknowledgment information may be a negative acknowledgment (negative acknowledgment, NACK) reply.

Optionally, the terminal device receives the second acknowledgment information, and the second acknowledgment information indicates that the first data fails to be received. It may also be understood that the terminal device fails to send the first data. Alternatively, the second acknowledgment information may indicate that the first data fails to be sent.

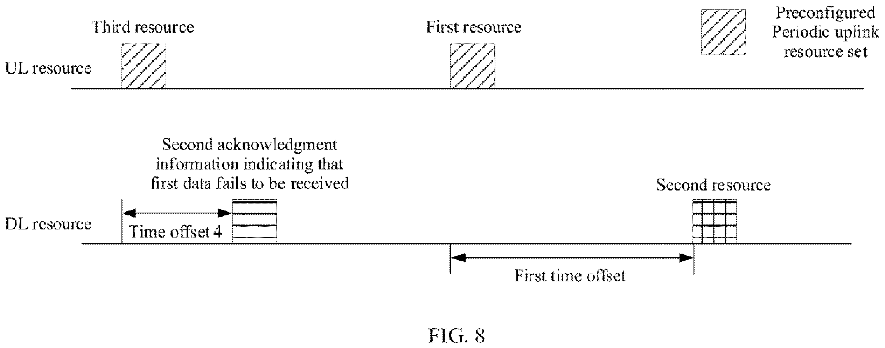

Optionally, a resource on which the network device sends the second acknowledgment information is associated with the third resource. For example, as shown in FIG. 8, a time offset of the resource on which the network device sends the second acknowledgment information relative to the third resource is a time offset 4. If the network device fails to receive the first data on the third resource, the network device sends the second acknowledgment information on the resource on which the second acknowledgment information is sent. The terminal device determines, based on the third resource and the time offset 4, a resource on which the second acknowledgment information is monitored. If the terminal device obtains, through monitoring, the second acknowledgment information on the resource on which the second acknowledgment information is monitored, and the second acknowledgment information indicates that the first data fails to be received, the terminal device determines that the first data fails to be sent on the third resource.

Optionally, a protocol may specify the time offset 4, or the network device may configure the time offset 4 for the terminal device. Optionally, the time offset 4 is less than a first time offset, and a length of the time offset 4 is less than a length of the first time offset.

Optionally, a resource on which the network device sends the second acknowledgment information is associated with the third resource. For example, the resource on which the second acknowledgment information is sent is in a second time window after the third resource. If the network device fails to receive the first data on the third resource, the network device sends the second acknowledgment information in the second time window. The terminal device determines, based on the third resource, the second time window in which the second acknowledgment information is monitored. If the terminal device obtains, through monitoring, the second acknowledgment information in the second time window, and the second acknowledgment information indicates that the first data fails to be received, the terminal device determines that the first data fails to be sent on the third resource.

Optionally, the protocol may specify a configuration of the second time window, or the network device may send a configuration of the second time window to the terminal device. The configuration of the second time window includes one or more of a length of the second time window and a time offset 6 of the second time window relative to the third resource.

It may be understood that a length of the time offset 6 may be greater than or equal to 0. In other words, if the time offset 6 is equal to 0, a time domain end moment of the third resource is a start moment of the second time window, or if the time offset 6 is greater than 0, a moment that is offset by the time offset 6 from the time domain end moment of the third resource is the start moment of the second time window. Optionally, if the protocol does not specify the time offset 6 of the second time window relative to the third resource, or the network device does not configure the time offset 6 of the second time window relative to the third resource, the time domain end moment of the third resource may be considered as the start moment of the second time window by default.

It should be noted that if the first data is successfully sent on the third resource, the method is the same as the method 200. In other words, if the first data is successfully sent on the first resource, the first resource in the method 200 is the third resource in the method 700.

S703: The terminal device sends the first data on the first resource, and the network device monitors the first data on the first resource.

Optionally, for the case 1 in step S701, the terminal device may determine the first resource in the periodic resource set. In other words, the third resource and the first resource in step S701 may be resources in a same periodic resource set. As shown in FIG. 8, the terminal device determines the first resource that is in the preconfigured uplink resource set and that is close to arrival time of the first data.

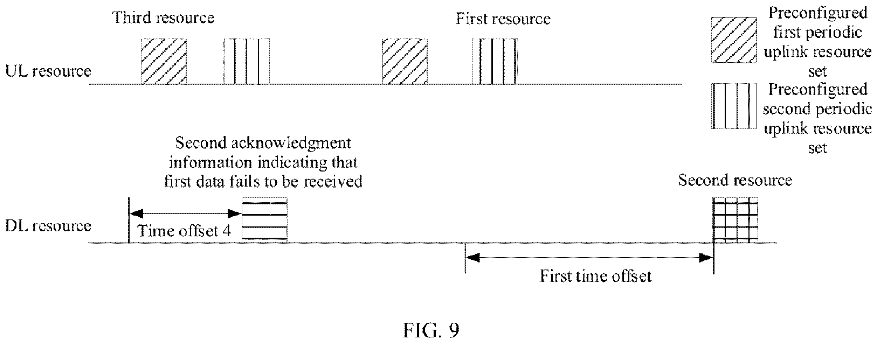

Optionally, for the case 2 in step S701, the terminal device may determine the first resource in the second periodic uplink resource set. In other words, the terminal device determines the first resource in the second periodic uplink resource set that is used for the retransmission. As shown in FIG. 9, the terminal device determines the first resource in the preconfigured second periodic uplink resource set.

S704: If the network device successfully receives the first data on the first resource, the network device sends, to the terminal device, the second data on a second resource associated with the first resource; and if the terminal device determines that the first data is successfully sent on the first resource, the terminal device monitors the second data on the second resource associated with the first resource.

Specifically, for step S704, refer to descriptions of step S202.

Optionally, if the network device fails to receive the first data on the first resource, or the terminal device fails to send the first data on the first resource, step S702 may be repeatedly performed. In other words, if the terminal device fails to retransmit the first data on the first resource, the network device may continue to send acknowledgment information to indicate that the first data fails to be sent, and retransmit the first data for another time on a resource used for retransmission. Optionally, the network device may configure a quantity of retransmission times.

Optionally, the third resource in step S701 may be a resource on which the first data is initially transmitted, or may be a resource on which the first data is retransmitted. For the case 2 in step S701, if the third resource is the resource on which the first data is retransmitted, the second periodic uplink resource set includes the third resource. In other words, the method 700 may be retransmission after an initial transmission failure, or may be a plurality of times of retransmission after an initial transmission failure.

In the method 700, after failing to send the first data on the third resource, the terminal device may receive the second control information, and retransmit the first data on the first resource indicated by the second control information. If the first data is successfully retransmitted, the terminal device monitors the downlink second data on the second resource associated with the first resource. In this way, power consumption caused by continuous blind detection on the downlink data by the terminal device, or overheads caused by the terminal device detecting the downlink data in a DRX manner can be avoided.

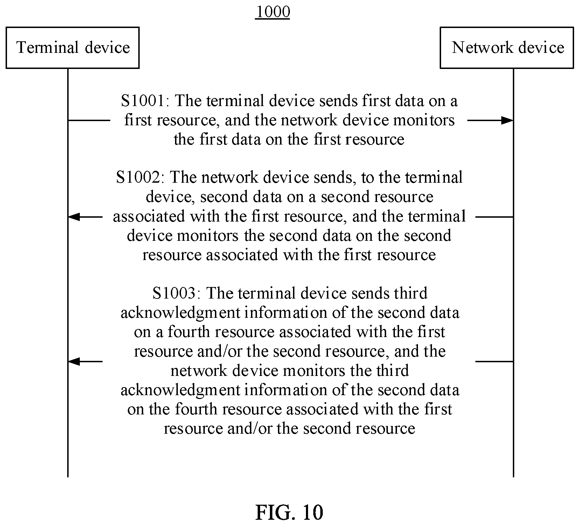

The method 500 and the method 700 describe a processing process after the first data fails to be sent. In some scenarios, the downlink second data may also fail to be sent. The following describes a case in which the downlink second data fails to be sent. As shown in FIG. 10, the method 1000 includes the following steps.

S 1001: A terminal device sends first data on a first resource, and a network device monitors the first data on the first resource.

S 1002: The network device sends second data on a second resource associated with the first resource, and the terminal device monitors the second data on the second resource associated with the first resource.

In a possible implementation, step S1001 may be step S201 in the method 200, and step S1002 may be step S202 in the method 200.

In a possible implementation, step S1001 may be step S503 in the method 500, and step S1002 may be step S504 in the method 500.

In a possible implementation, step S1001 may be step S703 in the method 700, and step S1002 may be step S704 in the method 700.

S1003: The terminal device sends third acknowledgment information of second data on a fourth resource associated with the first resource and/or the second resource, where the third acknowledgment information indicates that the terminal device successfully receives the second data; and the network device monitors the third acknowledgment information of the second data on the fourth resource associated with the first resource and/or the second resource. For example, the third acknowledgment information may be an ACK.

Optionally, if the terminal device successfully receives the second data, the third acknowledgment information indicates that the terminal device successfully receives the second data, or the third acknowledgment information indicates that the network device successfully sends the second data.

Optionally, the fourth resource may be associated with the first resource in time domain. For example, a time offset of the fourth resource relative to the first resource is a second time offset. Alternatively, the fourth resource may be associated with the first resource in frequency domain. Alternatively, the fourth resource may be associated with the first resource in time domain and frequency domain.

Optionally, the fourth resource may be associated with the second resource in time domain. For example, a time offset of the fourth resource relative to the second resource is a third time offset. Alternatively, the fourth resource may be associated with the second resource in frequency domain. Alternatively, the fourth resource may be associated with the second resource in time domain and frequency domain.

For a specific method for associating the fourth resource with the first resource and a specific method for associating the fourth resource with the second resource, refer to related descriptions of associating the second resource with the first resource in the foregoing embodiments. Details are not described herein again.

Optionally, if the time offset of the fourth resource relative to the second resource is the third time offset, the time offset of the fourth resource relative to the first resource is the second time offset, and the time offset of the second resource relative to the first resource is a first time offset, the second time offset is equal to a sum of the third time offset and the first time offset.

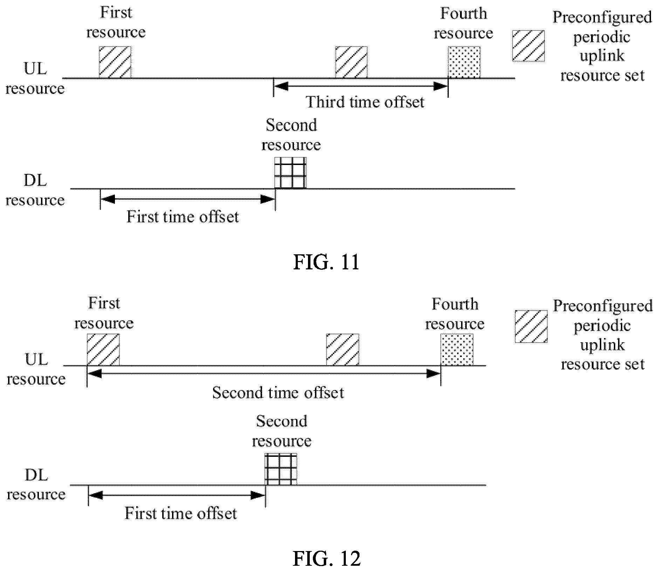

Optionally, before step S1003, the method further includes: The network device configures, for the terminal device, a time domain length and/or a frequency domain location of an uplink resource on which the terminal device feeds back the third acknowledgment information of the second data. Optionally, the network device may configure, for the terminal device, the time domain length and/or the frequency domain location of the uplink resource on which the terminal device feeds back the third acknowledgment information of the second data when the terminal device is in an RRC connected state. In other words, after the first data is successfully sent, the terminal device determines, based on the time domain length of the uplink resource that is configured by the network device and on which the terminal device feeds back the third acknowledgment information and the second time offset and/or the third time offset, a time domain location at which the third acknowledgment information of the second data is fed back, and determines, based on the time domain location and the configured frequency domain location, the fourth resource on which the third acknowledgment information of the second data is fed back. For example, as shown in FIG. 11, a frequency domain location of the fourth resource is configured by the network device, the time offset of the fourth resource relative to the second resource is the third time offset, a time domain start location of the fourth resource is obtained based on a time domain start location of the second resource and the third time offset, and a time domain length of the fourth resource is configured by the network device. For another example, as shown in FIG. 12, the frequency domain location of the fourth resource is configured by the network device, the time offset of the fourth resource relative to the first resource is the second time offset, the time domain start location of the fourth resource is obtained based on a time domain start location of the first resource and the second time offset, and the time domain length of the fourth resource is configured by the network device.

In the foregoing method 1000, after successfully receiving the second data, the terminal device may send, to the network device, the third acknowledgment information of the second data on the fourth resource associated with the second resource and/or the first resource. In this way, the network device does not need to detect, in real time, a location of the resource on which the third acknowledgment information is sent, thereby helping reduce power consumption of the network device.

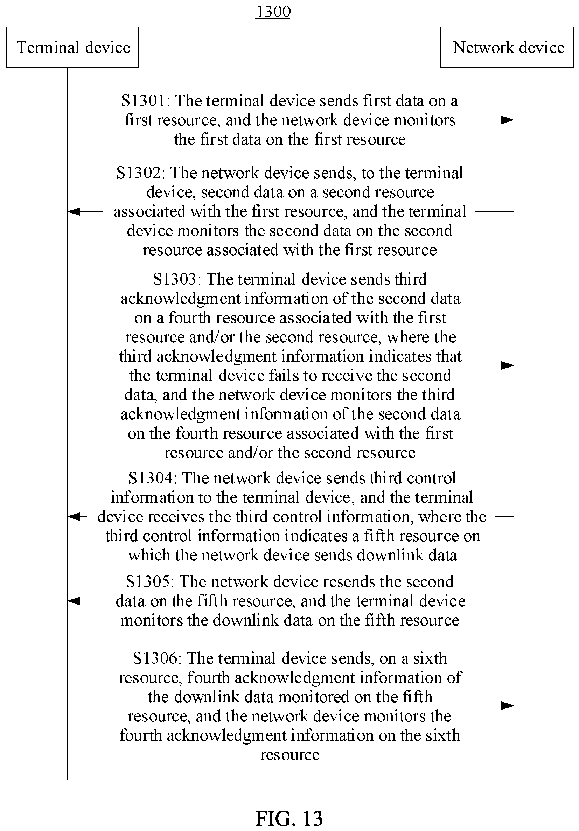

The foregoing method 1000 describes a case in which the network device successfully sends the second data. In some scenarios, the network device may fail to send the second data due to a reason like link quality deterioration, or the terminal device may fail to decode the second data. With reference to a method 1300 in FIG. 13, the following describes a case in which the network device fails to send the second data.

Step S1301 is the same as step S1001.

Step S1302 is the same as step S1002.

S1303: A terminal device sends third acknowledgment information of second data on a fourth resource associated with a first resource and/or a second resource, where the third acknowledgment information indicates that the terminal device fails to receive the second data, and a network device monitors the third acknowledgment information of the second data on the fourth resource associated with the first resource and/or the second resource. For example, the third acknowledgment information may be a NACK.

Optionally, if the terminal device fails to receive the second data, the third acknowledgment information indicates that the terminal device fails to receive the second data, or the third acknowledgment information indicates that the network device fails to send the second data.

For an association between the fourth resource and the first resource and/or the second resource, refer to descriptions of step S 1003.

S1304: The network device sends third control information to the terminal device, and the terminal device receives the third control information, where the third control information indicates a fifth resource on which the network device sends downlink data.

For example, the third control information may be third DCI.

For example, the fifth resource is a resource on which the network device resends the second data.

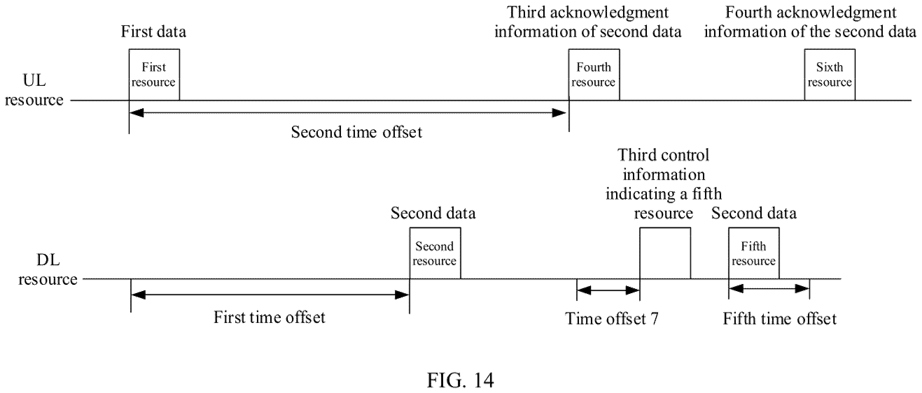

Optionally, a resource on which the network device sends the third control information is associated with the fourth resource. For example, as shown in FIG. 14, a time offset of the resource on which the network device sends the third control information relative to the fourth resource is a time offset 7. If the network device receives the third control information on the fourth resource, and the third control information indicates that the terminal device fails to receive the second data, the network device determines, based on the fourth resource and the time offset 7, the resource on which the third control information is sent, and sends the third control information on the determined resource on which the third control information is sent. The terminal device determines, based on the fourth resource and the time offset 7, a resource on which the third control information is monitored. If the terminal device obtains, through monitoring, the third control information on the resource on which the third control information is monitored, and the third control information indicates the fifth resource on which the network device sends the downlink data, for example, the fifth resource is a resource on which the network device resends the second data, the terminal device monitors the downlink data on the fifth resource, for example, monitors the second data.

S1305: The network device resends the second data on the fifth resource, and the terminal device monitors the downlink data on the fifth resource.

For example, the terminal device may monitor the second data on the fifth resource.

Optionally, the third control information further indicates a sixth resource, and the terminal device feeds back, on the sixth resource, fourth acknowledgment information of the downlink data monitored by the terminal device on the fifth resource. For example, the third control information indicates a sixth resource on which the fourth acknowledgment information of the second data monitored on the fifth resource is fed back. In this way, the method 1300 includes the following steps.

S1306: The terminal device sends, on the sixth resource, fourth acknowledgment information of the downlink data monitored on the fifth resource, and the network device monitors the fourth acknowledgment information on the sixth resource.

For example, the terminal device sends, on the sixth resource, the fourth acknowledgment information of the second data monitored on the fifth resource, and the network device monitors the fourth acknowledgment information on the sixth resource.

Optionally, if the terminal device successfully receives the downlink data (for example, the second data) on the fifth resource, the fourth acknowledgment information sent on the sixth resource indicates that the terminal device successfully receives the downlink data (for example, the second data) on the fifth resource. In this case, the fourth acknowledgment information may be an ACK.

Optionally, if the terminal device fails to receive the downlink data (for example, the second data) on the fifth resource, the terminal device sends the fourth acknowledgment information on the sixth resource, where the fourth acknowledgment information indicates that the terminal device fails to receive the downlink data (for example, the second data) on the fifth resource. In this case, the fourth acknowledgment information may be a NACK.

Optionally, the sixth resource is associated with the fifth resource. In other words, the third control information may indicate the fifth resource but does not indicate the sixth resource, and the terminal device may determine the sixth resource based on an association between the sixth resource and the fifth resource.

Optionally, that the sixth resource is associated with the fifth resource may be that the sixth resource may be associated with the fifth resource in time domain. For example, a time offset of the sixth resource relative to the fifth resource is a fifth time offset. Alternatively, the sixth resource may be associated with the fifth resource in frequency domain. Alternatively, the sixth resource may be associated with the fifth resource in time domain and frequency domain. For a specific method for associating the sixth resource with the fifth resource, refer to related descriptions of associating the second resource with the first resource in the foregoing embodiments. Details are not described herein again.

Optionally, before step S1306, the method further includes: The network device configures a time domain length and/or a frequency domain location of the sixth resource for the terminal device. Optionally the network device may configure the time domain length and/or the frequency domain location of the sixth resource for the terminal device when the terminal device is in an RRC connected state. In other words, after the terminal device receives the second data on the fifth resource, the terminal device determines a time domain location of the sixth resource based on the time domain length that is of the sixth resource and that is configured by the network device and the fifth time offset, and determines the sixth resource based on the time domain location and the configured frequency domain location. For example, as shown in FIG. 14, the frequency domain location of the sixth resource is configured by the network device, a time domain start location of the sixth resource is obtained by the terminal device based on a time domain start location of the fifth resource and the fifth time offset, and the time domain length of the sixth resource is configured by the network device.

It may be understood that, alternatively, the terminal device may not send the fourth acknowledgment information of the second data monitored on the fifth resource. In other words, step S 1306 may not exist.

Optionally, if the terminal device fails to receive the downlink data (for example, the second data) on the fifth resource, the terminal device sends the fourth acknowledgment information on the sixth resource, where the fourth acknowledgment information indicates that the terminal device fails to receive the downlink data (for example, the second data) on the fifth resource. For example, the fourth acknowledgment information is a NACK. The network device may continue to resend the second data in the manner described in the method 1300, and the terminal device continues to monitor the second data. In this way, the network device can repeatedly send the second data, to ensure that the terminal device can receive the second data.

In the method 1300, after failing to send the second data on the second resource, the network device may send the third control information, for example, the third control information may be the third DCI. The third control information indicates the fifth resource on which the second data is resent, and the network device resends the second data on the fifth resource indicated by the third control information. In this way, power consumption caused by blind detection of the terminal device on the second data resent by the network device can be avoided, and power consumption caused by blind detection of the network device on the fourth acknowledgment information can also be avoided.

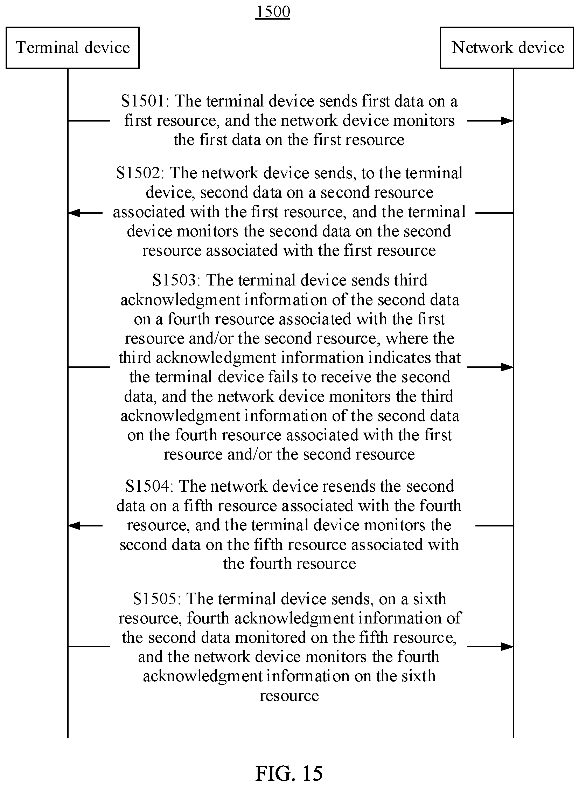

With reference to FIG. 15, the following describes another case in which the network device fails to send the second data. A method 1500 includes the following steps.

Steps S1501 to S 1503 are respectively the same as steps S 1301 to S 1303.

S1504: A network device resends second data on a fifth resource associated with a fourth resource, and a terminal device monitors the second data on the fifth resource associated with the fourth resource.

Optionally, that the fifth resource is associated with the fourth resource may be that the fifth resource may be associated with the fourth resource in time domain. For example, a time offset of the fifth resource relative to the fourth resource is a fourth time offset. Alternatively, the fifth resource may be associated with the fourth resource in frequency domain. Alternatively, the fifth resource may be associated with the fourth resource in time domain and frequency domain. For a specific method for associating the fifth resource with the fourth resource, refer to specific descriptions of associating the second resource with the first resource in the foregoing embodiments. Details are not described herein again.

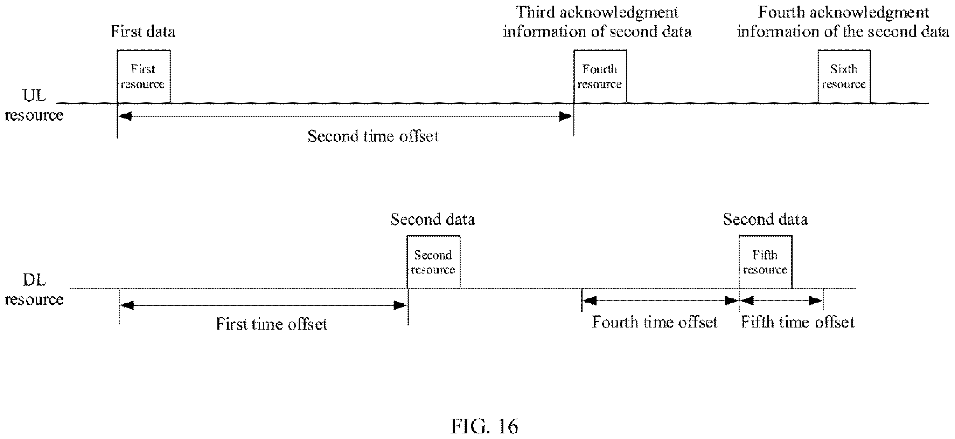

Optionally, before step S1504, the method further includes: The network device configures a time domain length and/or a frequency domain location of the fifth resource for the terminal device. Optionally the network device may configure the time domain length and/or the frequency domain location of the fifth resource for the terminal device when the terminal device is in an RRC connected state. In other words, after the terminal device sends third acknowledgment information on the fourth resource, the terminal device determines a time domain location of the fifth resource based on the time domain length that is of the fifth resource and that is configured by the network device and the fourth time offset, and determines the fifth resource based on the time domain location and the configured frequency domain location. For example, as shown in FIG. 16, the frequency domain location of the fifth resource is configured by the network device, a time domain start location of the fifth resource is obtained by the terminal device based on a time domain start location of the fourth resource and the fourth time offset, and the time domain length of the fifth resource is configured by the network device.

S1505: The terminal device sends, on a sixth resource, fourth acknowledgment information of the second data monitored on the fifth resource, and the network device monitors the fourth acknowledgment information on the sixth resource.

Optionally, if the terminal device successfully receives the second data on the fifth resource, the fourth acknowledgment information sent on the sixth resource indicates that the terminal device successfully receives the second data on the fifth resource. In this case, the fourth acknowledgment information may be an ACK.

Optionally, if the terminal device fails to receive the second data on the fifth resource, the terminal device sends the fourth acknowledgment information on the sixth resource, where the fourth acknowledgment information indicates that the terminal device fails to receive the second data on the fifth resource. In this case, the fourth acknowledgment information may be a NACK.

Optionally, the sixth resource is associated with the fifth resource. For the association between the sixth resource and the fifth resource, refer to the foregoing descriptions of associating the second resource with the first resource.

Optionally, if the terminal device fails to receive the second data on the fifth resource, the terminal device sends the fourth acknowledgment information on the sixth resource, where the fourth acknowledgment information indicates that the terminal device fails to receive the second data on the fifth resource. For example, the fourth acknowledgment information is a NACK. The network device may continue to resend the second data in the manner described in the method 1500, and the terminal device continues to monitor the second data. In this way, the network device can repeatedly send the second data, to ensure that the terminal device can receive the second data.

In the method 1500, after failing to send the second data on the second resource, the network device may resend the second data on the fifth resource associated with the fourth resource on which the third acknowledgment information is received. In this way, power consumption caused by blind detection of the terminal device on the second data resent by the network device can be avoided, and power consumption caused by blind detection of the network device on the fourth acknowledgment information can also be avoided.

It should be noted that in embodiments of this application, if a resource A is associated with a resource B, and the resource B is associated with a resource C, it may be understood that the resource A is also associated with the resource C.

It should also be noted that the resource B is obtained after the resource A is offset by a time offset, which may be understood as: the resource B is obtained by offsetting a time domain start location of the resource A by a time offset, or the resource B is obtained by offsetting a time domain end location of the resource A by a time offset.

It should also be noted that, when configuring a plurality of pieces of information for the terminal device, the network device may simultaneously configure the plurality of pieces of information, or may separately configure the plurality of pieces of information. For example, the network device may simultaneously configure a plurality of time offsets in the foregoing embodiments for the terminal device, or may separately configure the plurality of time offsets. How the network device configures the plurality of pieces of information for the terminal device is not limited in embodiments of this application.

It should be understood that in the foregoing method embodiments, the terminal device and the network device are used as examples for description, and the foregoing method embodiments are also applicable to a D2D scenario.

It may be understood that an execution sequence of the foregoing method embodiments is not limited by a number, and the execution sequence may be determined according to internal logic. The execution sequence of the method may be exchanged on the premise that there is no contradiction.

It may be understood that the foregoing method embodiments may be independent embodiments or embodiments that may be combined with each other. Steps in different method embodiments may be mutually combined to be referred to as other embodiments, and steps in a same method embodiment may also be mutually combined to form another embodiment.

It may be understood that the methods and operations implemented by the terminal device in the foregoing method embodiments may alternatively be implemented by a component (for example, a chip or a circuit) that can be used in the terminal device, and the methods and operations implemented by the network device in the foregoing method embodiments may alternatively be implemented by a component (for example, a chip or a circuit) that can be used in the network device.

The foregoing describes the method embodiments provided in this application, and the following describes apparatus embodiments provided in this application. It should be understood that descriptions of the apparatus embodiments correspond to descriptions of the method embodiments. Therefore, for content that is not described in detail, refer to the foregoing method embodiments. For brevity, details are not described herein again.

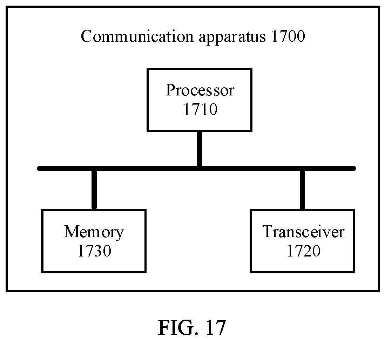

As shown in FIG. 17, an embodiment of this application provides a communication apparatus 1700. The communication apparatus 1700 includes a processor 1710 and a transceiver 1720. The processor 1710 and the transceiver 1720 communicate with each other by using an internal connection path. The processor 1710 is configured to execute instructions, to control the transceiver 1720 to send a signal and/or receive a signal.

Optionally, the communication apparatus 1700 may further include a memory 1730. The memory 1730 communicates with the processor 1710 and the transceiver 1720 by using an internal connection path. The memory 1730 is configured to store instructions, and the processor 1710 may execute the instructions stored in the memory 1730. In a possible implementation, the communication apparatus 1700 is configured to implement procedures and steps corresponding to the terminal device in the foregoing method embodiments. In another possible implementation, the communication apparatus 1700 is configured to implement procedures and steps corresponding to the network device in the foregoing method embodiments.

It should be understood that the communication apparatus 1700 may be specifically the terminal device, the network device, the first device, or the second device in the foregoing embodiments, or may be a chip or a chip system. Correspondingly, the transceiver 1720 may be a transceiver circuit of the chip. This is not limited herein. Specifically, the communication apparatus 1700 may be configured to perform steps and/or procedures corresponding to the terminal device, the network device, the first device, or the second device in the foregoing method embodiments. Optionally, the memory 1730 may include a read-only memory and a random access memory, and provide instructions and data for the processor. A part of the memory may further include a nonvolatile random access memory. For example, the memory may further store information about a device type. The processor 1710 may be configured to execute the instructions stored in the memory; and when the processor 1710 executes the instructions stored in the memory, the processor 1710 is configured to perform steps and/or procedures corresponding to the terminal device, the network device, the first device, or the second device in the foregoing method embodiments.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed by a hardware decoding processor, or may be performed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the steps or procedures performed by the terminal device, the network device, the first device, or the second device in the foregoing method embodiments.

According to the methods provided in embodiments of this application, this application further provides a computer-readable storage medium. The computer-readable storage medium stores program code. When the program code is run on a computer, the computer is enabled to perform the steps or procedures performed by the terminal device, the network device, the first device, or the second device in the foregoing method embodiments.

According to the methods provided in embodiments of this application, this application further provides a communication system, including the foregoing one or more terminal devices and one or more network devices.

The foregoing apparatus embodiments are completely corresponding to the method embodiments, and corresponding modules or units perform corresponding steps. For example, a communication unit (transceiver) performs receiving or sending steps in the method embodiments, and other steps other than the sending and receiving steps may be performed by a processing unit (processor). A function of a specific unit may be based on a corresponding method embodiment. There may be one or more processors.

In this application, "indication" may include a direct indication and an indirect indication, or may include an explicit indication and an implicit indication. Information indicated by specific information is referred to as to-be-indicated information. In a specific implementation process, the to-be-indicated information may be indicated in a plurality of manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, the terms and English abbreviations are all examples given for ease of description, and should not constitute any limitation on this application. This application does not exclude a possibility of defining another term that can implement a same or similar function in an existing or a future protocol.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

In the foregoing embodiments, all or some functions of the functional units may be implemented by using software, hardware, firmware, or any combination thereof. When software is used for implementation, all or some functions of the functional units may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applied to a first device, and the method comprises:
sending first data on a first resource; and
monitoring second data on a second resource associated with the first resource.

2. The method according to claim 1, wherein a time offset of the second resource relative to the first resource is a first time offset.

3. The method according to claim 1 or 2, wherein the monitoring second data on a second resource associated with the first resource comprises:
if the first data is successfully sent on the first resource, monitoring the second data on the second resource associated with the first resource.

4. The method according to claim 3, wherein the method further comprises:
if first control information indicating the first device to retransmit the first data is not received, determining that the first data is successfully sent on the first resource; or
if first acknowledgment information of the first data is received, and the first acknowledgment information indicates that the first data is successfully received, determining that the first data is successfully sent on the first resource.

5. The method according to any one of claims 1 to 4, wherein before the sending first data on a first resource, the method further comprises:
sending the first data on a preconfigured third resource; and
receiving second control information, wherein the second control information indicates the first resource on which the first device retransmits the first data.

6. The method according to any one of claims 1 to 4, wherein before the sending first data on a first resource, the method further comprises:
sending the first data on a preconfigured third resource; and
the sending first data on a first resource comprises:
if second acknowledgment information of the first data sent on the third resource is received, and the second acknowledgment information indicates that the first data fails to be received, retransmitting the first data on the preconfigured first resource.

7. The method according to claim 5 or 6, wherein the preconfigured third resource is used for initial transmission or retransmission.

8. The method according to any one of claims 5 to 7, wherein the first resource and the third resource are resources comprised in a same periodic resource set, or the first resource and the third resource are resources comprised in different periodic resource sets.

9. The method according to any one of claims 1 to 8, wherein the method further comprises:
sending third acknowledgment information of the second data on a fourth resource associated with the first resource and/or the second resource.

10. The method according to claim 9, wherein a time offset of the fourth resource relative to the first resource is a second time offset, and/or a time offset of the fourth resource relative to the second resource is a third time offset.

11. The method according to claim 9 or 10, wherein if the first device fails to receive the second data on the second resource, the third acknowledgment information indicates that the second data fails to be received; and the method further comprises:
monitoring the second data on a fifth resource.

12. The method according to claim 11, wherein a time offset of the fifth resource relative to the fourth resource is a fourth time offset, or before the monitoring the second data on a fifth resource, the method further comprises:
receiving third control information, wherein the third control information indicates the fifth resource on which the second device resends the second data.

13. The method according to claim 12, wherein the method further comprises:
sending, on a sixth resource, fourth acknowledgment information of the second data monitored on the fifth resource and, wherein
the third control information further indicates the sixth resource, or a time offset of the sixth resource relative to the fifth resource is a fifth time offset.

14. The method according to any one of claims 9 to 13, wherein before the monitoring second data on a second resource associated with the first resource, the method further comprises:
monitoring the second data on a seventh resource associated with the first resource; and
the monitoring second data on a second resource associated with the first resource comprises:
if the second data fails to be received on the seventh resource, monitoring the second data on the second resource associated with the first resource.

15. A data transmission method, wherein the method is applied to a second device, and the method comprises:
monitoring first data on a first resource; and
if the first data is received on the first resource, sending second data on a second resource associated with the first resource.

16. The method according to claim 15, wherein a time offset of the second resource relative to the first resource is a first time offset.

17. The method according to claim 15 or 16, wherein before the monitoring first data on a first resource, the method further comprises:
monitoring the first data on a third resource, wherein the third resource is a resource preconfigured by the second device; and
if the first data is not received on the third resource, sending second control information, wherein the second control information indicates the first resource on which the first data is retransmitted.

18. The method according to claim 15 or 16, wherein before the monitoring first data on a first resource, the method further comprises:
monitoring the first data on a third resource, wherein the third resource is a resource preconfigured by the second device; and
if the first data is not received on the third resource, sending second acknowledgment information, wherein the second acknowledgment information indicates that the first data fails to be received.

19. The method according to claim 17 or 18, wherein the third resource preconfigured by the second device is used for initial transmission or retransmission.

20. The method according to any one of claims 17 to 19, wherein the first resource and the third resource are resources comprised in a same periodic resource set, or the first resource and the third resource are resources comprised in different periodic resource sets.

21. The method according to any one of claims 15 to 20, wherein the method further comprises:
monitoring third acknowledgment information of the second data on a fourth resource associated with the first resource and/or the second resource.

22. The method according to claim 21, wherein a time offset of the fourth resource relative to the first resource is a second time offset, and/or a time offset of the fourth resource relative to the second resource is a third time offset.

23. The method according to claim 21 or 22, wherein the method further comprises:
if the third acknowledgment information of the second data is received on the fourth resource, and the third acknowledgment information indicates that the second data fails to be received, resending the second data on a fifth resource.

24. The method according to claim 23, wherein a time offset of the fifth resource relative to the fourth resource is a fourth time offset, or if third acknowledgment information of the second data is received on the fourth resource, and the third acknowledgment information indicates that the second data fails to be received, the resending the second data on a fifth resource comprises:
sending third control information, wherein the third control information indicates the fifth resource on which the second device resends the second data.

25. The method according to claim 24, wherein the method further comprises:
monitoring, on a sixth resource, fourth acknowledgment information of the second data resent on the fifth resource, wherein
the third control information further indicates the sixth resource, or a time offset of the sixth resource relative to the fifth resource is a fifth time offset.

26. The method according to any one of claims 21 to 25, wherein before the sending second data on a second resource associated with the first resource, the method further comprises:
sending the second data on a seventh resource associated with the first resource; and
the sending second data on a second resource associated with the first resource comprises:
if the second data fails to be sent on the seventh resource, resending the second data on the second resource associated with the first resource.

27. A communication apparatus, comprising a processor and a memory, wherein the processor is coupled to the memory, the memory is configured to store a computer program or instructions, and the processor is configured to execute the computer program or instructions in the memory, so that the method according to any one of claims 1 to 14 or the method according to any one of claims 15 to 26 is performed.

28. A computer-readable storage medium, storing a program or instructions used to implement the method according to any one of claims 1 to 14 or the method according to any one of claims 15 to 26.

29. A computer program product comprising instructions, wherein when the computer program product runs on a computer, the computer is enabled to perform the method according to any one of claims 1 to 14, or perform the method according to any one of claims 15 to 26.

30. A chip, wherein the chip is coupled to a memory, and is configured to read and execute program instructions stored in the memory, to implement the method according to any one of claims 1 to 14 or implement the method according to any one of claims 15 to 26.
